# FASCICULE DE BREVET EUROPEEN

(11) **EP 1 449 716 B1**
(45) Date de publication et mention de la délivrance du brevet: **23.11.2005**
(21) Numéro de dépôt: 02291148.1
(22) Date de dépôt: 06.05.2002
(51) Int. Cl.: B60Q 1/12, B60Q 1/14

(54) **Dispositif d'éclairage pour un véhicule automobile**
Beleuchtungsvorrichtung für ein Kraftfahrzeug bei Kurvenfahrt
Lighting device for an automotive vehicle during cornering

(30) Priorité: 11.05.2001 FR 0106343
(43) Date de publication de la demande: 25.08.2004
(73) Titulaire: VALEO VISION, 93012 Bobigny Cédex (FR)
(72) Inventeur: Jeannot, Laurent, 75012 Paris (FR)

(56) Documents cités:
- CH-A- 192 267
- FR-A- 1 536 280
- FR-A- 2 727 497
- FR-A- 2 760 705

## Description

La présente invention concerne un dispositif d'éclairage pour un véhicule automobile.

La présente invention concerne plus particulièrement un dispositif d'éclairage qui est agencé à l'avant d'un véhicule automobile, de chaque côté de son axe longitudinal, et qui comporte, d'une part, une paire de projecteurs de croisement, respectivement gauche et droit, réalisant un faisceau réglementaire de feu de croisement et, d'autre part, une paire de projecteurs de route, respectivement gauche et droit, réalisant un faisceau réglementaire de feu de route, du type dans lequel le faisceau de feu de croisement comporte une limite directionnelle, ou coupure, au-dessus de laquelle l'intensité lumineuse émise est faible, et du type dans lequel le faisceau de feu de route est globalement centré sur un point de concentration qui est situé sur l'axe longitudinal du véhicule.

La présente invention est relative à un dispositif d'éclairage dans lequel les projecteurs ne sont pas du type dit « bi-fonctions », c'est à dire que chaque projecteur de croisement est distinct du projecteur de route associé, par opposition à un projecteur bi-fonctions qui comporte par exemple une lampe à deux filaments, un filament de route et un filament de croisement, agencée dans un réflecteur unique.

Les faisceaux d'éclairage réglementaires produits par les projecteurs d'un véhicule automobile ne sont généralement pas adaptés aux situations de virage, car ils sont orientés de manière fixe et globalement longitudinalement vers l'avant.

Lorsque le véhicule circule dans un virage, le conducteur a besoin d'un éclairage qui est plutôt dirigé vers l'intérieur du virage, en vue de lui permettre d'anticiper la suite du virage et de placer le véhicule sur une trajectoire optimale.

On connaît principalement trois solutions pour réaliser un faisceau d'éclairage adapté aux situations de virage.

Selon une première solution connue, on utilise les projecteurs de croisement du véhicule que l'on fait pivoter dans le sens du virage. Par exemple, dans un virage vers la gauche, on fait pivoter le projecteur gauche de croisement vers la gauche et, dans un virage vers la droite, on fait pivoter le projecteur droit de croisement vers la droite.

Cette solution n'est pas satisfaisante car, en faisant pivoter un projecteur de croisement, on modifie les caractéristiques de la coupure du faisceau réglementaire de feu de croisement, notamment la répartition de l'intensité lumineuse autour de la coupure, ce qui provoque des difficultés pour assurer la conformité du dispositif d'éclairage avec la réglementation en vigueur.

Selon une deuxième solution connue, on utilise des petits projecteurs additionnels, par exemple le module d'éclairage antibrouillard, que l'on oriente du côté du virage, en fonction de l'angle de rotation du volant et en fonction de la vitesse du véhicule.

Selon une troisième solution connue, on utilise deux petits projecteurs additionnels qui sont déjà orientés chacun vers un côté de l'axe longitudinal du véhicule. Les projecteurs additionnels gauche et droit sont par exemple orientés suivant deux directions horizontales qui décrivent un angle de quarante-cinq degrés par rapport à l'axe longitudinal, respectivement vers la gauche et vers la droite. L'intensité lumineuse produite par les projecteurs additionnels peut être commandée en fonction de l'angle de rotation du volant et en fonction de la vitesse du véhicule.

Ces deux dernières solutions nécessitent d'utiliser un module additionnel.

De plus, le flux lumineux fourni par les projecteurs additionnels est relativement faible.

Le document FR 2 760 705 décrit un système d'éclairage pour véhicule automobile qui comporte au moins deux projecteurs du type à coupure droite pour l'émission du faisceaux de virage. Il comporte des moyens pour commander la puissance d'alimentation desdits projecteurs en fonction du braquage des roues du véhicule. Il nécessite la présence de tels projecteurs sur le véhicule automobile.

Dans le but de remédier à ces inconvénients, l'invention propose un dispositif d'éclairage du type décrit précédemment, caractérisé en ce qu'il comporte une unité de pilotage des projecteurs qui, lorsque le véhicule circule en feu de croisement dans un virage, commande au moins un des projecteurs de route de manière que son faisceau d'éclairage réalise un faisceau additionnel d'éclairage en virage, ou faisceau de virage, qui augmente l'intensité lumineuse globalement dans la direction du virage.

Selon d'autres caractéristiques de l'invention :
- la zone d'intensité lumineuse maximale du faisceau de virage est décalée horizontalement dans la direction du virage, par rapport à la zone d'intensité lumineuse maximale du feu de croisement ;
- le faisceau de virage est situé globalement sous la coupure ;
- le faisceau d'éclairage produit par les projecteurs de route est toujours situé globalement sous la coupure du faisceau de feu de croisement ;
- l'unité de pilotage commande l'orientation du faisceau de virage en fonction de l'angle de braquage des roues directrices du véhicule de sorte que, plus le virage est serré, plus le faisceau de virage est décalé horizontalement dans la direction du virage ;
- le dispositif d'éclairage comporte des moyens pour diminuer l'intensité lumineuse maximale du faisceau d'éclairage produit par les projecteurs de route lorsqu'ils réalisent un faisceau de virage ;
- l'unité de pilotage commande l'intensité lumineuse émise par la source lumineuse de chaque projecteur de route ;
- les projecteurs de route comportent des moyens pour étaler horizontalement leur faisceau d'éclairage lorsqu'ils réalisent un faisceau de virage, de sorte que, plus le virage est serré, plus le faisceau de virage est étalé horizontalement ;
- chaque projecteur de route comporte, à l'avant, une glace de protection munie de stries en vue d'étaler le faisceau d'éclairage lorsqu'il réalise un faisceau de virage ;
- l'unité de pilotage commande, en déplacement horizontal, la source lumineuse et/ou le réflecteur de chaque projecteur de route, en vue de réaliser un faisceau de virage ;
- lorsque le véhicule circule en feu de croisement dans un virage, l'unité de pilotage allume soit le projecteur gauche de route, si le virage est orienté vers la gauche, soit le projecteur droit de route, si le virage est orienté vers la droite.

D'autres caractéristiques et avantages de l'invention apparaîtront à la lecture de la description détaillée qui suit pour la compréhension de laquelle on se reportera aux dessins annexés dans lesquels :
- la figure 1 est un schéma qui représente un véhicule équipé d'un dispositif d'éclairage conforme aux enseignements de l'invention ;
- la figure 2 est une vue de dessus qui représente schématiquement le bloc d'éclairage gauche du véhicule de la figure 1, le projecteur de route occupant une position de feu de route ;
- la figure 3 est un schéma qui représente un faisceau d'éclairage réglementaire en feu de croisement et le faisceau d'éclairage produit par les projecteurs de route ;
- la figure 4 est un schéma similaire au précédent qui représente un faisceau réglementaire de feu de route et le faisceau d'éclairage produit par les projecteurs de croisement ;
- la figure 5 est une vue similaire à celle de la figure 2 qui représente schématiquement le projecteur de route lorsqu'il réalise un faisceau de virage vers la gauche ;
- la figure 6 est un schéma similaire à celui de la figure 3 qui représente le faisceau réglementaire de feu de croisement et le faisceau de virage gauche ;
- la figure 7 est un schéma similaire à celui de la figure 3 qui représente le faisceau réglementaire de feu de croisement et le faisceau de virage gauche produits par un dispositif d'éclairage selon un deuxième mode de réalisation de l'invention.

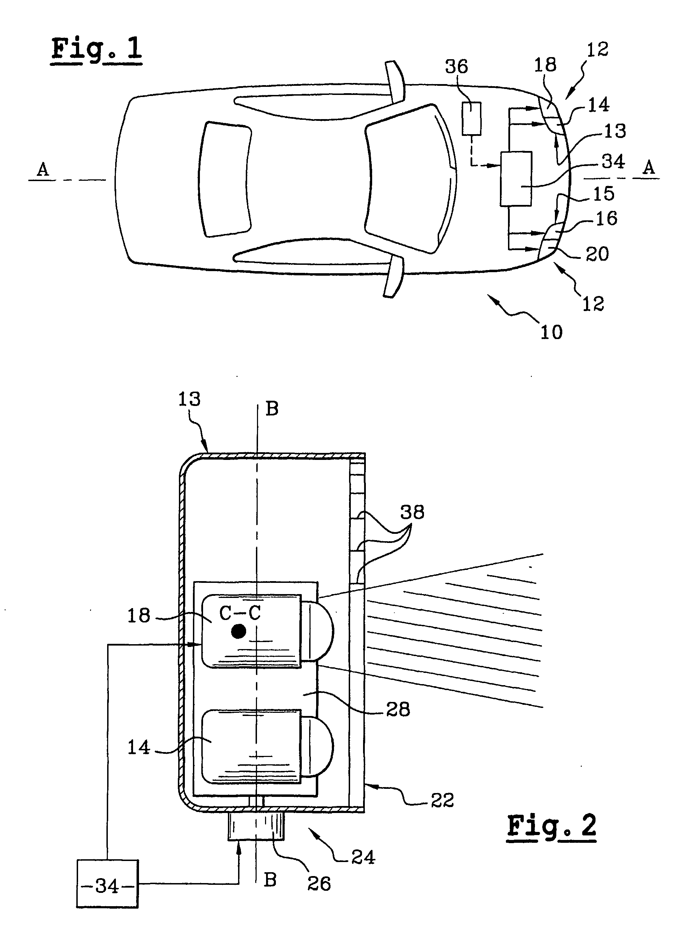

On a représenté sur la figure 1 un véhicule 10 automobile qui comporte un dispositif d'éclairage 12 réalisé conformément aux enseignements de l'invention.

Dans la suite de la description, on utilisera à titre non limitatif, une orientation d'arrière en avant suivant l'axe longitudinal A-A du véhicule 10, c'est à dire de la gauche vers la droite en considérant la figure 1.

Le dispositif d'éclairage 12 est agencé à l'avant du véhicule 10 et il comporte deux blocs d'éclairage, respectivement gauche 13 et droit 15, qui sont agencés de manière sensiblement symétrique par rapport à un plan de symétrie vertical passant par l'axe longitudinal A-A.

Chaque bloc d'éclairage 13, 15 comporte un projecteur de croisement 14, 16 et un projecteur de route 18, 20 distincts qui sont agencés ici derrière une glace de protection 22. Le bloc d'éclairage gauche 13 est représenté schématiquement sur la figure 2.

Dans le mode de réalisation représenté ici, les projecteurs de croisement 14, 16 sont agencés du côté de l'axe longitudinal A-A et les projecteurs de route 18, 20 sont agencés du côté opposé à l'axe longitudinal A-A.

Bien entendu, selon une variante de réalisation (non représentée), les projecteurs de route 18, 20 peuvent être agencés du côté de l'axe longitudinal A-A.

Les projecteurs 14, 16, 18, 20 sont réalisés selon des techniques connues. Chacun des projecteurs de croisement 14, 16 comporte par exemple une lampe à décharge agencée derrière une lentille et chacun des projecteurs de route 18, 20 comporte par exemple une lampe à filament, ou à arc électrique, agencée à l'intérieur d'un réflecteur à surface complexe. D'autres types de projecteurs peuvent aussi être employés.

Lorsqu'ils sont allumés, les projecteurs de croisement 14, 16 produisent ensemble un faisceau réglementaire de feu de croisement Fc.

Le faisceau réglementaire de feu de croisement Fc est caractérisé notamment par une « coupure », c'est à dire une limite directionnelle au-dessus de laquelle on émet une faible intensité lumineuse. Cette coupure est généralement constituée d'un demi-plan horizontal, à gauche de l'axe longitudinal du projecteur (pour un sens de circulation à droite), et d'un demi-plan légèrement incliné vers le haut, à droite de ce même axe longitudinal. Ce dernier demi-plan est relevé d'un « angle de relèvement de coupure » qui est, pour un faisceau normalisé européen, de quinze degrés.

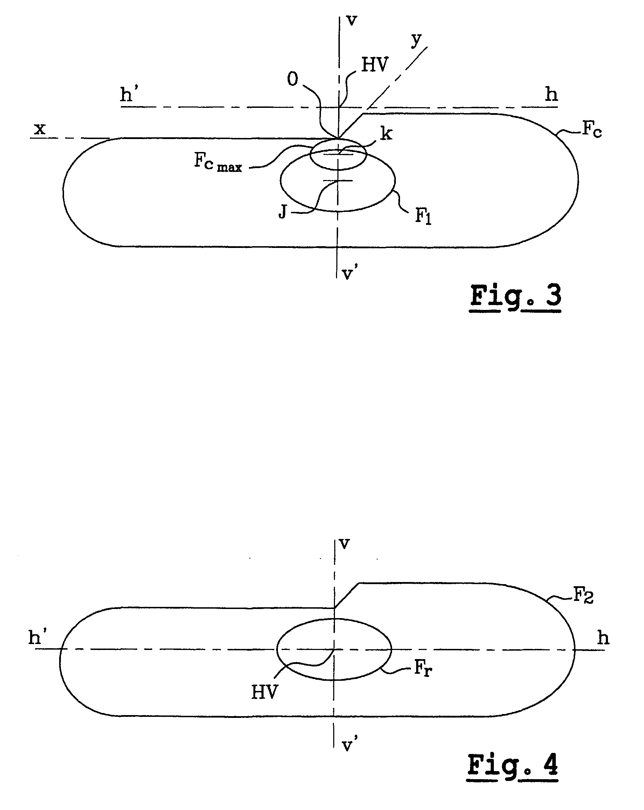

L'éclairement produit par un tel faisceau Fc sur un écran placé à environ vingt-cinq mètres à l'avant des projecteurs de croisement 14, 16 est représenté sur la figure 3, le point HV étant la trace de l'axe longitudinal A-A du véhicule 10, à l'intersection du plan vertical v'v et du plan horizontal h'h. La coupure est définie par la demi-droite Ox qui s'étend parallèlement et au-dessous de l'axe horizontal h'h, du point O vers la gauche, et par la demi-droite Oy, inclinée de quinze degrés, qui s'étend du point O vers le haut et vers la droite.

Le faisceau de feu de croisement Fc forme sur l'écran une tâche lumineuse comportant une zone d'intensité lumineuse maximale Fcmax qui est globalement centrée en un point K situé au voisinage de l'axe vertical v'v, sous le point O, légèrement décalé vers la droite.

On note que la description se réfère à un sens de circulation du véhicule 10 à droite. Pour un sens de circulation à gauche, il suffit de considérer les figures représentant l'écran inversées par rapport à l'axe v'v.

De préférence, conformément à la représentation schématique de la figure 2, chaque bloc d'éclairage 13 comporte un correcteur de portée 24 qui est commandé par une unité de pilotage 34.

On note que la réglementation européenne impose de munir les projecteurs de croisement 14, 16 comportant une lampe du type à décharge d'un correcteur automatique de portée.

Sur la figure 2, on a représenté schématiquement le correcteur de portée 24 sous la forme d'un moteur électrique 26 qui est susceptible de provoquer le pivotement, autour d'un axe transversal B-B qui est sensiblement horizontal et orthogonal à l'axe longitudinal A-A, d'un support 28 portant le projecteur de croisement 14 et le projecteur de route 18.

Le pivotement du support 28 autour de l'axe transversal B-B est commandé par l'unité de pilotage 34, de manière notamment à corriger la portée du faisceau de feu de croisement Fc, c'est à dire l'inclinaison du faisceau Fc par rapport à l'axe longitudinal A-A, en fonction des variations de l'assiette du véhicule 10. Ces variations d'assiette apparaissent généralement lors des phases d'accélération et lors des phases de freinage du véhicule 10.

Dans le mode de réalisation représenté ici, les projecteurs de route 18, 20 sont agencés sur leur support 28, par rapport aux projecteurs de croisement 14, 16 associés, de manière qu'ils produisent un faisceau d'éclairage F1 qui est toujours situé globalement sous la coupure du faisceau de feu de croisement Fc.

Lorsque le dispositif d'éclairage 12 fonctionne en feu de croisement Fc, la portion horizontale Ox de la coupure est obligatoirement située sous l'axe horizontal h'h, de manière à ne pas éblouir les conducteurs des véhicules circulant en sens inverse. Par conséquent, si l'on allume les projecteurs de route 18 dans cette situation, alors le faisceau d'éclairage F1 produit par les projecteurs de route 18 est globalement centré sur un point de concentration J situé sur l'axe v'v, au-dessous du point HV, comme on l'a représenté sur la figure 3.

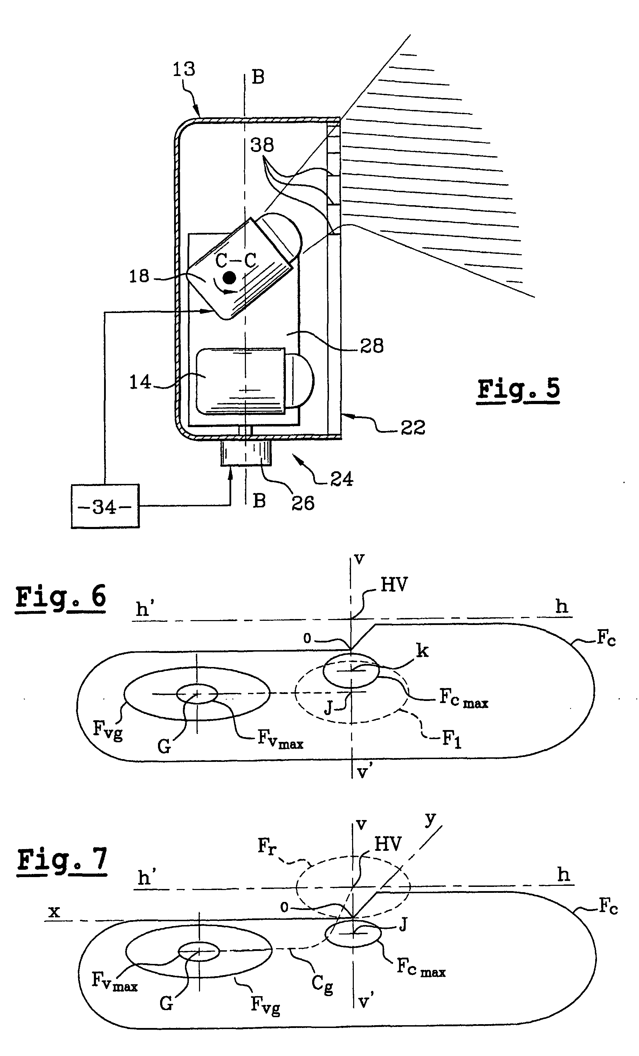

On réalise un faisceau réglementaire de feu de route Fr en commandant le correcteur d'assiette 24 de chaque bloc d'éclairage 13, 15 de manière qu'il relève le faisceau d'éclairage F1 produit par les projecteurs de route 18, 20 jusqu'à ce que son point de concentration soit sensiblement confondu avec le point HV, comme on l'a représenté sur la figure 4.

De manière connue, lorsque l'on réalise un faisceau réglementaire de feu de route Fr, on peut allumer simultanément les projecteurs de croisement 14, 16 et les projecteurs de route 18, 20, de manière que le faisceau d'éclairage F2 produit par les projecteurs de croisement 14, 16 enrichisse le faisceau d'éclairage Fr produit par les projecteurs de route 18, 20.

Lorsque les projecteurs de route 18, 20 réalisent le faisceau réglementaire de feu de route, ils occupent une position de feu de route, qui est illustrée sur la figure 2, dans laquelle ils sont orientés globalement suivant l'axe longitudinal A-A.

Conformément aux enseignements de l'invention, lorsque le véhicule 10 circule en feu de croisement Fc dans un virage, l'unité de pilotage 34 commande au moins un des projecteurs de route 18, 20 de manière que son faisceau d'éclairage réalise un faisceau additionnel d'éclairage en virage, ou faisceau de virage Fv, qui augmente l'intensité lumineuse globalement dans la direction du virage.

Avantageusement, lorsque le véhicule 10 circule en feu de croisement Fc dans un virage orienté vers la gauche, ou vers la droite, l'unité de pilotage 34 allume le projecteur gauche de route 18, respectivement le projecteur droit de route 20, et provoque le déplacement de son faisceau d'éclairage F1 sensiblement horizontalement vers la gauche, respectivement vers la droite.

De préférence, la zone d'intensité lumineuse maximale Fvₘₐₓ du faisceau de virage Fv est décalée horizontalement, par rapport à la zone d'intensité lumineuse maximale Fcmax du faisceau de feu de croisement Fc, du côté du virage.

Dans le mode de réalisation représenté ici, le projecteur de route 18 est par exemple monté à rotation autour d'un axe C-C sensiblement vertical, de manière que l'unité de pilotage 34 puisse commander son pivotement autour de l'axe C-C dans la direction du virage.

Par exemple, en considérant la figure 5, l'unité de pilotage 34 a commandé le pivotement du projecteur gauche de route 18 dans le sens anti-horaire, de manière à produire un faisceau de virage gauche Fvg.

Sur la figure 6 on a représenté les faisceaux d'éclairage produits par les projecteurs de croisement 14, 16 et par les projecteurs de route 18, 20 lorsque le dispositif d'éclairage 12 fonctionne en feu de croisement Fc.

La zone en traits pointillés, centrée sur le point J, illustre le faisceau d'éclairage F1 produit par les projecteurs de route 18, 20 lorsqu'ils occupent la position feu de route.

On a représenté, centré sur le point G, le faisceau de virage gauche Fvg produit par le projecteur gauche de route 18 lorsque le véhicule 10 circule en feu de croisement Fc dans un virage vers la gauche.

Comme le faisceau d'éclairage F1 produit par les projecteurs de route 18, 20 est toujours situé sous la coupure, il ne produit pas des rayons éblouissant pour les conducteurs circulant en sens inverse, même lorsque les projecteurs de route 18, 20 réalisent un faisceau de virage Fv.

Selon le mode de réalisation préféré de l'invention, l'unité de pilotage 34 commande les projecteurs de route 18, 20 en virage en fonction de l'angle de braquage des roues directrices, de manière que, plus le virage est serré, plus le décalage horizontal du faisceau de virage Fv dans la direction du virage soit élevé.

A cet effet, l'unité de pilotage 34 mesure, par exemple, l'angle de rotation du volant du véhicule 10 à l'aide d'un capteur 36.

Selon une variante de réalisation (non représentée), quelle que soit la forme du virage, le projecteur de route 18, 20 utilisé pour le faisceau de virage Fv pivote autour de l'axe C-C d'un angle fixe par rapport à l'axe longitudinal A-A, par exemple de quarante-cinq degrés.

De préférence, le dispositif d'éclairage 12 comporte aussi des moyens pour diminuer l'intensité lumineuse maximale du faisceau d'éclairage produit par les projecteurs de route 18, 20 lorsqu'ils réalisent un faisceau de virage Fv, de manière que l'intensité lumineuse du faisceau de virage Fv soit comprise dans une fourchette de valeurs réglementaires.

Dans le mode de réalisation représenté sur les figures 2 et 5, la glace de protection 22 de chaque projecteur de route 18, 20 comporte des stries 38 d'orientation globalement verticale qui provoquent par réfraction un étalement horizontal du faisceau de virage Fv.

Avantageusement, les stries 38 sont de plus en plus déviatrices, vers la gauche pour le projecteur gauche 18, vers la droite pour le projecteur droit 20, par exemple en étant de plus en plus rapprochées, de sorte que, plus le virage est serré, plus le faisceau de virage Fv est étalé et plus son intensité lumineuse maximale est faible.

On note que la glace de protection 22 peut aussi comporter des stries supplémentaires (non représentées) prévues pour réaliser une coupure dans le faisceau de virage Fv, notamment en vue de maintenir le faisceau de virage Fv sous la coupure du faisceau de feu de croisement Fc.

Selon une variante de réalisation, l'unité de pilotage 34 peut commander la source lumineuse de chaque projecteur de route 18, 20 de manière à diminuer l'intensité lumineuse du faisceau d'éclairage produit par les projecteurs de route 18, 20 lorsqu'ils réalisent un faisceau de virage Fv.

Il n'est généralement pas nécessaire de prévoir un faisceau de virage Fv, lorsque le véhicule 10 circule en feu de route Fr. Néanmoins, selon une variante de réalisation (non représentée) de l'invention, l'unité de pilotage 34 peut commander les projecteurs de route 18, 20 de manière qu'ils réalisent un faisceau de feu de route Fr se décalant horizontalement du côté du virage.

Selon un autre mode de réalisation de l'invention (non représenté), les projecteurs de route 18, 20 sont totalement indépendants des projecteurs de croisement 14, 16 associés. Ils sont par exemple montés sur leur propre support et ils possèdent leur propre correcteur de portée, similaire à celui décrit précédemment.

Selon ce mode de réalisation, lorsque les projecteurs de route 18, 20 fonctionnent en feu de route Fr, ils produisent un faisceau d'éclairage, représenté en traits pointillés sur la figure 7, qui est globalement centré sur le point HV et qui est situé au-dessus de la coupure du faisceau de feu de croisement Fc.

On a représenté, centré sur le point G, le faisceau de virage Fvg produit par le projecteur gauche de route 18 lorsque le véhicule 10 circule en feu de croisement Fc dans un virage.

Pour réaliser ce faisceau de virage Fvg, l'unité de pilotage 34 commande donc le projecteur gauche de route 18 de manière à provoquer le déplacement de son faisceau d'éclairage vers le bas et vers la gauche. Le faisceau d'éclairage du projecteur gauche de route 18 décrit alors globalement une courbe Cg, qui croise la coupure, depuis le point HV jusqu'au point G.

En feu de croisement Fc et en situation de virage, par exemple vers la gauche, le projecteur gauche de route 18 ne doit s'allumer que lorsque son faisceau d'éclairage est situé sous la coupure du faisceau réglementaire de feu de croisement Fc.

Selon des variantes de réalisation non représentées, l'intensité lumineuse des faisceaux de virage Fv et leur orientation peut être pilotée suivant des paramètres de fonctionnement supplémentaires, par exemple en fonction de la vitesse longitudinale du véhicule 10.

Bien entendu, l'invention s'applique aussi à un dispositif d'éclairage 12 ne comportant pas de correcteur de portée. On prévoit alors un dispositif de déplacement spécifique (non représenté) permettant par exemple de modifier l'orientation du faisceau d'éclairage produit par les projecteurs de route 18, 20 en vue de réaliser un faisceau d'éclairage en virage (Fv).

## Revendications

1. Dispositif d'éclairage (12) qui est agencé à l'avant d'un véhicule automobile (10), de chaque côté de son axe longitudinal (A-A), et qui comporte, d'une part, une paire de projecteurs de croisement, respectivement gauche (14) et droit (16), réalisant un faisceau réglementaire de feu de croisement (Fc) et, d'autre part, une paire de projecteurs de route, respectivement gauche (18) et droit (20), réalisant un faisceau réglementaire de feu de route (Fr), du type dans lequel le faisceau de feu de croisement (Fc) comporte une limite directionnelle, ou coupure, au-dessus de laquelle l'intensité lumineuse émise est faible, et du type dans lequel le faisceau de feu de route (Fr) est globalement centré sur un point de concentration (HV) qui est situé sur l'axe longitudinal du véhicule,
**caractérisé en ce qu'**il comporte une unité de pilotage (34) des projecteurs (14, 16, 18, 20) qui, lorsque le véhicule (10) circule en feu de croisement (Fc) dans un virage, commande au moins un des projecteurs de route (18, 20) de manière que son faisceau d'éclairage réalise un faisceau additionnel d'éclairage en virage, ou faisceau de virage (Fv), qui augmente l'intensité lumineuse globalement dans la direction du virage.

2. Dispositif d'éclairage (12) selon la revendication précédente, **caractérisé en ce que** la zone d'intensité lumineuse maximale (Fvₘₐₓ) du faisceau de virage (Fv) est décalée horizontalement dans la direction du virage, par rapport à la zone d'intensité lumineuse maximale (Fcₘₐₓ) du feu de croisement.

3. Dispositif d'éclairage (12) selon l'une quelconque des revendications précédentes, **caractérisé en ce que** le faisceau de virage (Fv) est situé globalement sous la coupure.

4. Dispositif d'éclairage (12) selon la revendication précédente, **caractérisé en ce que** le faisceau d'éclairage produit par les projecteurs de route (18, 20) est toujours situé globalement sous la coupure du faisceau de feu de croisement (Fc).

5. Dispositif d'éclairage (12) selon l'une quelconque des revendications précédentes, **caractérisé en ce que** l'unité de pilotage (34) commande l'orientation du faisceau de virage (Fv) en fonction de l'angle de braquage des roues directrices du véhicule (10) de sorte que, plus le virage est serré, plus le faisceau de virage (Fv) est décalé horizontalement dans la direction du virage.

6. Dispositif d'éclairage (12) selon l'une quelconque des revendications précédentes, **caractérisé en ce qu'**il comporte des moyens (38) pour diminuer l'intensité lumineuse maximale du faisceau d'éclairage produit par les projecteurs de route (18, 20) lorsqu'ils réalisent un faisceau de virage (Fv).

7. Dispositif d'éclairage (12) selon la revendication précédente, **caractérisé en ce que** l'unité de pilotage (34) commande l'intensité lumineuse émise par la source lumineuse (30) de chaque projecteur de route (18, 20).

8. Dispositif d'éclairage (12) selon l'une quelconque des revendications précédentes, **caractérisé en ce que** les projecteurs de route (18, 20) comportent des moyens (38) pour étaler horizontalement leur faisceau d'éclairage lorsqu'ils réalisent un faisceau de virage (Fv), de sorte que, plus le virage est serré, plus le faisceau de virage (Fv) est étalé horizontalement.

9. Dispositif d'éclairage (12) selon la revendication précédente, **caractérisé en ce que** chaque projecteur de route (18, 20) comporte, à l'avant, une glace de protection (32) munie de stries (38) en vue d'étaler le faisceau d'éclairage lorsqu'il réalise un faisceau de virage (Fv).

10. Dispositif d'éclairage (12) selon l'une quelconque des revendications précédentes, **caractérisé en ce que** l'unité de pilotage (34) commande, en déplacement horizontal, la source lumineuse (30) et/ou le réflecteur de chaque projecteur de route (18, 20), en vue de réaliser un faisceau de virage (Fv).

11. Dispositif d'éclairage (12) selon l'une quelconque des revendications précédentes, **caractérisé en ce que**, lorsque le véhicule (10) circule en feu de croisement (Fc) dans un virage, l'unité de pilotage (34) allume soit le projecteur gauche de route (18), si le virage est orienté vers la gauche, soit le projecteur droit de route (20), si le virage est orienté vers la droite.

## Patentansprüche

1. Beleuchtungsvorrichtung (12), die an der Frontseite eines Fahrzeugs (10) auf jeder Seite von dessen Längsachse (A-A) angeordnet ist und einerseits ein Paar Abblendlichtscheinwerfer links (14) bzw. rechts (16), die ein vorschriftsmäßiges Abblendlicht (Fc) erzeugen, und andererseits ein Paar Fernlichtscheinwerfer links (18) bzw. rechts (20), die ein vorschriftsmäßiges Fernlicht (Fr) erzeugen, umfasst, von der Art, bei der das Abblendlichtbündel (Fc) eine Begrenzung in einer Richtung bzw. eine Hell-Dunkel-Grenze aufweist, oberhalb der die emittierte Lichtstärke gering ist, und von der Art, bei der das Fernlichtbündel (Fr) allgemein auf einen Konzentrationspunkt (HV) zentriert ist, der auf der Längsachse des Fahrzeugs liegt,
**dadurch gekennzeichnet, dass** sie eine Einheit (34) zum Steuern der Scheinwerfer (14, 16, 18, 20) umfasst die dann, wenn das Fahrzeug (10) eine Kurve mit Abblendlicht (Fc) befährt, wenigstens einen der Fernlichscheinwerfer (18, 20) derart betätigt, dass dessen Lichtbündel in der Kurve ein zusätzliches Lichtbündel oder Kurvenlichtbündel (Fv) erzeugt, das die allgemeine Lichtstärke in Richtung der Kurve erhöht.

2. Beleuchtungsvorrichtung (12) nach dem vorhergehenden Anspruch, **dadurch gekennzeichnet, dass** der Bereich größter Lichtstärke (FVₘₐₓ) des Kurvenlichtbündels (Fv) bezüglich des Bereichs größter Lichtstärke (FCₘₐₓ) des Abblendlichts horizontal in Richtung der Kurve versetzt ist.

3. Beleuchtungsvorrichtung (12) nach einem der vorhergehenden Ansprüche, **dadurch gekennzeichnet, dass** das Kurvenlichtbündel (Fv) allgemein unter der Hell-Dunkel-Grenze liegt.

4. Beleuchtungsvorrichtung (12) nach dem vorhergehenden Anspruch, **dadurch gekennzeichnet, dass** das von den Fernlichtscheinwerfern (18, 20) erzeugt Lichtbündel immer allgemein unter der Hell-Dunkel-Grenze des Abblendlichts (Fc) liegt.

5. Beleuchtungsvorrichtung (12) nach einem der vorhergehenden Ansprüche, **dadurch gekennzeichnet, dass** die Steuereinheit (34) die Ausrichtung des Kurvenlichtbündels (Fv) in Abhängigkeit vom Einschlagwinkel der Vorderräder des Fahrzeugs (10) derart betätigt, dass das Kurvenlichtbündel (Fv) umso weiter horizontal in Richtung der Kurve versetzt wird, je enger die Kurve ist.

6. Beleuchtungsvorrichtung (12) nach einem der vorhergehenden Ansprüche, **dadurch gekennzeichnet, dass** sie Mittel (38) zum Verringern der maximalen Lichtstärke des von den Fernlichtscheinwerfern (18, 20) erzeugten Lichtbündels umfasst, wenn diese ein Kurvenlichtbündel (Fv) erzeugen.

7. Beleuchtungsvorrichtung (12) nach dem vorhergehenden Anspruch, **dadurch gekennzeichnet, dass** die Steuereinheit (34) die von der Lichtquelle (30) eines jeden Fernlichtscheinwerfers (18, 20) emittierte Lichtstärke steuert.

8. Beleuchtungsvorrichtung (12) nach einem der vorhergehenden Ansprüche, **dadurch gekennzeichnet, dass** die Fernlichtscheinwerfer (18, 20) Mittel (38) zum horizontalen Auffächern ihres Lichtbündels umfassen wenn diese ein Kurvenlichtbündel (Fv) erzeugen, derart, dass das kurvenlichtbündel (Fv) umso stärker horizontal aufgefächert wird, je enger die Kurve ist.

9. Beleuchtungsvorrichtung (12) nach dem vorhergehenden Anspruch, **dadurch gekennzeichnet, dass** jeder Fernlichtscheinwerfer (18, 20) vorne eine mit Riffelungen (38) versehene Schutzscheibe (32) aufweist, um das Lichtbündel aufzufächern, wenn dieser ein Kurvenlichtbündel (Fv) erzeugt.

10. Beleuchtungsvorrichtung (12) nach einem der vorhergehenden Ansprüche, **dadurch gekennzeichnet, dass** die Steuereinheit (34) mittels Horizontalverschiebung die Lichtquelle (30) und/oder den Reflektor eines jeden Fernlichtscheinwerfers (18, 20) betätigt, um ein Kurvenlichtbündel (Fv) zu erzeugen.

11. Beleuchtungsvorrichtung (12) nach einem der vorhergehenden Ansprüche, **dadurch gekennzeichnet, dass** die Steuereinheit (34) dann, wenn das Fahrzeug (10) eine Kurve mit Abblendlicht (Fc) befährt, entweder den linken Fernlichtscheinwerfer (18) bei einer Linkskurve oder den rechten Fernlichtscheinwerfer (20) bei einer Rechtskurve einschaltet.

## Claims

1. Lighting apparatus (12) which is arranged in the front of a motor vehicle (10), on each side of its longitudinal axis (A-A), and which includes, firstly, a pair of passing headlights, namely a left hand passing headlight (14) and a right hand passing headlight (16) respectively, for producing a regulation dipped or passing beam (Fc), and secondly, a pair of cruising headlights, namely a left hand cruising headlight (18) and a right hand cruising headlight (20) respectively, for producing a regulation main beam (Fr), the apparatus being of the type in which the passing beam (Fc) includes a directional limit or cut-off, above which the light intensity emitted is weak, and of the type in which the main beam (Fr) is generally centred on a point of concentration (HV) which is situated on the longitudinal axis of the vehicle,
**characterised in that** it includes a control unit (34) for the headlights (14, 16, 18, 20), which, when the vehicle (10) is travelling on a bend using the passing beam (Fc), controls at least one of the cruising headlights (18, 20) in such a way that its light beam produces an additional beam for lighting the bend, or bend beam (Fv), which increases the light intensity generally in the direction of the bend.

2. Lighting apparatus (12) according to Claim 1, **characterised in that** the zone of maximum light intensity (Fvₘₐₓ) or of the bend beam (Fv) is offset, horizontally in the direction of the bend, with respect to the zone of maximum light intensity (Fcₘₐₓ) of the passing headlight.

3. Lighting apparatus (12) according to Claim 1 or Claim 2, **characterised in that** the bend beam (Fv) is situated globally below the cut-off.

4. Lighting apparatus (12) according to Claim 3, **characterised in that** the light beam produced by the cruising headlights (18, 20) is always situated generally below the cut-off of the beam from the cruising light (Fc).

5. Lighting apparatus (12) according to any one of the preceding Claims, **characterised in that** the control unit (34) controls the orientation of the bend beam (Fv) as a function of the steering angle of the steered wheels of the vehicle (10), in such a way that, the tighter the bend, the more the bend beam (Fv) is offset horizontally in the direction of the bend.

6. Lighting apparatus (12) according to any one of the preceding Claims, **characterised in that** it includes means (38) for reducing the maximum light intensity of the lighting beam produced by the cruising headlights (18, 20) when they are producing a bend beam (Fv).

7. Lighting apparatus (12) according to Claim 6, **characterised in that** the control unit (34) controls the light intensity emitted by the light source (30) of each cruising headlight (18, 20).

8. Lighting apparatus (12) according to any one of the preceding Claims, **characterised in that** the cruising headlights (18, 20) include means (38) for horizontally spreading their light beam when they are producing a bend beam (Fv), whereby, the tighter the bend, the more the bend beam (Fv) is spread horizontally.

9. Lighting apparatus (12) according to Claim 8, **characterised in that** each cruising headlight (18, 20) includes, at the front, a protective cover glass (32) having ribs for spreading the light beam when it is producing a bend beam (Fv).

10. Lighting apparatus (12) according to any one of the preceding Claims, **characterised in that** the control unit (34) controls, in horizontal displacement, the light source (30) and/or the reflector of each cruising headlight (18, 20) whereby to produce a bend beam (Fv).

11. Lighting apparatus (12) according to any one of the preceding Claims, **characterised in that**, when the vehicle (10) is travelling in a bend using the passing beam (Fc), the control unit (34) switches on either the left cruising headlight (18) if the bend is oriented to the left, or the right cruising headlight (20) if the bend is oriented to the right.
